# EUROPÄISCHE PATENTSCHRIFT

(11) **EP 2 329 970 B1**
(45) Veröffentlichungstag und Bekanntmachung des Hinweises auf die Patenterteilung: **27.06.2012**
(21) Anmeldenummer: 10014965.7
(22) Anmeldetag: 25.11.2010
(51) Int. Cl.: B60G 11/20, B60G 21/055, B60G 17/016, B60G 11/18, B60G 3/18

(54) **Achssteller, insbesondere Hinterachssteller eines Kraftfahrzeuges**
Axle regulator, in particular rear axle regulator for a motor vehicle
Régulateur d'axe, notamment régulateur d'axe arrière d'un véhicule automobile

(30) Priorität: 04.12.2009 DE 102009057004
(43) Veröffentlichungstag der Anmeldung: 08.06.2011
(73) Patentinhaber: Audi AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A1- 1 958 804
- WO-A1-2008/068207
- DE-A1- 4 015 777
- DE-A1- 10 001 087
- DE-A1-102004 004 335
- DE-A1-102004 048 196
- US-A1- 2006 017 251

## Beschreibung

Die Erfindung betrifft einen Achssteller, insbesondere Hinterachssteller eines Kraftfahrzeugs nach dem Oberbegriff des Anspruchs 1.

Ein Achssteller kann ein Drehfedersystem als Speicherfeder aufweisen, das einerseits über eine Drehschwinge mit einem Achslenker verbunden ist und andererseits über einen steuerbaren Stellantrieb fahrzeugfest abgestützt ist.

Zudem ist ein elektromechanischer Stabilisator für das Fahrwerk eines Fahrzeugs aus der DE 100 01 087 A1 bekannt mit einem zwischen zwei Stabilisatorhälften eingebundenen und diese bedarfsweise gegeneinander um einen Verdrehwinkel verdrehenden Aktuator, der aus einem Elektromotor sowie einem diesem nachgeschalteten Getriebe besteht. Es handelt sich somit hier um einen üblichen U-förmigen Stabilisator, der mittig geteilt ist und dessen Stabilisatorhälften gesteuert gegeneinander insbesondere zur Verbesserung der Wankeigenschaften verdrehbar sind. Als Getriebe wird hier unter anderem ein Cyclo-Getriebe vorgeschlagen mit einem Abtriebswellenzapfen der drehfest mit einer Stabilisatorhälfte verbunden ist.

Ein Cyclo-Getriebe mit zwei Kurvenscheiben ist beispielsweise aus DE 10 2004 048 196 A1 bekannt.

Aus der EP 1 958 804 A1 ist ein gattungsgemäßer Achssteller bekannt, dessen Drehfedersystem einerseits über eine Drehschwinge mit einem Achslenker verbunden ist und andererseits über einen steuerbaren Stellantrieb fahrzeugfest abgestützt ist. Das Drehfedersystem ist ineinander geschachtelt und weist ein Drehfederrohr sowie einen Drehfederstab auf. Der Stellantrieb besteht aus einem Elektroantrieb mit einem nachgeschalteten Harmonic-Drive-Getriebe, dessen Abtriebswelle für eine Drehverstellung mit dem Drehfedersystem verbunden ist. Aus der DE 10 2004 004 335 A1 ist eine Fahrwerksanordnung für ein Fahrzeug bekannt, die linke und rechte Stabilisatorhälften zur Anbindung an eine linke und eine rechte Radführung einer Achse aufweist. Jeder der Stabilisatorhälften ist ein Stellantrieb mit einem Untersetzungsgetriebe zugeordnet, das ein Cyclo-Getriebe sein kann.

Aufgabe der Erfindung ist es, einen gattungsgemäßen Achssteller so auszubilden, dass bei guter Funktion eine sehr kompakte Bauweise erreicht wird.

Diese Aufgabe wird dadurch gelöst, dass das Drehfedersystem ineinander geschachtelt wenigstens ein Drehfederrohr und wenigstens einen Drehfederstab aufweist und der Stellantrieb aus einem Elektroantrieb mit einem nachgeschalteten Cyclo-Getriebe besteht, dessen Abtriebswelle für eine Verdrehverstellung mit dem Drehfedersystem verbunden ist.

Durch die Ineinanderschachtelung des Drehfedersystems wird eine große Funktionslänge der Speicherfeder bei vorteilhaft kurzer Bauweise erreicht, wodurch einerseits der üblicherweise beschränkte Bauraum am Fahrwerk gut genutzt und/oder Freiräume für Zusatzkonstruktionen geöffnet werden. Zur kompakten Bauweise trägt zudem das dem Elektroantrieb nachgeschaltete Cyclo-Getriebe bei, welches mit dem Elektroantrieb eine kompakt integrierte Einheit bilden kann, wobei das Cyclo-Getriebe zudem im Vergleich zu anderen Getrieben einen hervorragenden Wirkungsgrad, eine geringe Empfindlichkeit gegenüber Schockbelastungen bei großer Laufruhe und einen günstigen Preis aufweist.

In einer bevorzugten konkreten Ausführung enthält das Drehfedersystem einen Drehfederstab aus Vollmaterial, der etwa horizontal in Fahrzeugquerrichtung verläuft und der teilweise in einem Drehfederrohr verdrehbar ausgenommen ist, wobei der Drehfederstab endseitig mit dem Drehfederrohr verdrehfest verbunden ist. Die Getriebeabtriebswelle des Cyclo-Getriebes ist mit dem freien Drehfederrohrende drehübertragend fest verbunden.

Erfindungsgemäß ist das Drehfederrohr mit dem innenliegenden Drehfederstab koaxial durch den Stellantrieb geführt dergestalt, dass ein Stellantrieb-Gehäuse mit einem fahrzeugfesten Hilfsrahmen verbunden ist, wobei der Elektroantrieb aus einem gehäusefesten Stator und einem Rotor mit einer Motor-Hohlabtriebswelle ausgeführt ist durch die koaxial das Drehfederrohr mit dem innenliegenden Drehfederstab geführt ist.

Die Motor-Hohlabtriebswelle weist dabei endseitig zum freien Drehfederrohrende hin einen Exzenter als Antriebsexzenter für wenigstens eine Kurvenscheibe des Cyclo-Getriebes auf, wobei die wenigstens eine Kurvenscheibe entlang des inneren Umfangs eines feststehenden, koaxialen Bolzenrings des Cyclo-Getriebes abwälzbar ist.

Die Getriebeabtriebswelle umfasst als Getriebe-Hohlabtriebswelle das Drehfederrohr und ist mit diesem endseitig drehübertragend verbunden, wobei der Drehfederstab über diese Verbindungsstelle mit einem Überstand aus dem Stellantrieb ragt und dort direkt oder indirekt verdrehfest mit der Drehschwinge verbunden ist.

Ersichtlich ist durch die Verschachtelung sowohl des Drehfedersystems als auch der Antriebselemente des Stelltriebs mit teilweiser Integration des Antriebsexzenters am oder im Elektromotor eine vorteilhaft kleinbauende Achsstelleinheit geschaffen, die zudem gewichtsgünstig und kostengünstig herstellbar ist.

In einer Ausführungsform kann die Drehschwinge unmittelbar am Drehfederstab angebunden sein. In der nachfolgenden alternativen Ausführungsform kann durch eine vorteilhafte zusätzliche Verschachtelung der Bauraum bei großer Funktionslänge der Speicherfeder weiter reduziert werden: Dazu ist der Überstand des Drehfederstabs, mit dem dieser aus dem Stellantrieb ragt, in einem zweiten Drehfederrohr verdrehbar aufgenommen, wobei der Drehfederstab endseitig mit dem zugeordneten Drehfederrohrende drehübertragend fest verbunden ist. Das zweite Drehfederrohr endet mit einem zweiten freien Drehfederrohrende in der Nähe des Stellantriebs, wobei dort die Drehschwinge verdrehfest angeschlossen ist.

Die Drehschwinge kann in an sich bekannter Weise über eine Koppel an einem Trapezlenker des Fahrwerks angeschlossen werden.

Die jeweils endseitigen drehübertragend festen Verbindungen der Ineinanderschachtelungen können zudem einfach als Steckverbindungen mit Verzahnungen, gegebenenfalls mit zugeordneten Axialsicherungen ausgeführt werden.

Insbesondere zur Beherrschung von möglichen Unwuchten soll das Cyclo-Getriebe zwei parallele Kurvenscheiben aufweisen.

Die Erfindung wird anhand einer Zeichnung weiter erläutert.

Es zeigen:
- Fig. 1: eine Draufsicht auf den linken Teil einer hinteren Radaufhängung mit einem Achssteller,
- Fig. 2: einen Längsschnitt durch einen Stellantrieb, und

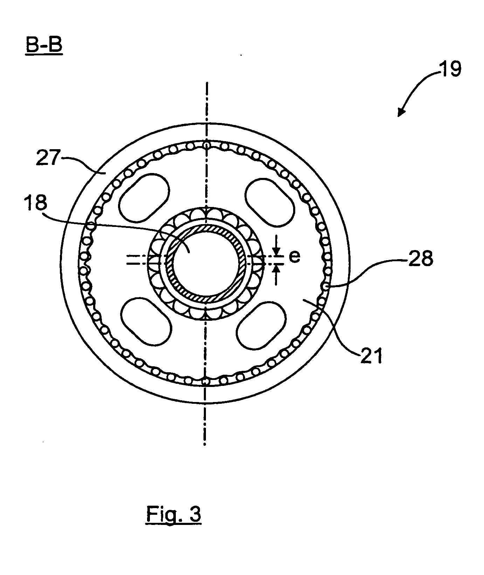

- Fig. 3: eine schematische Darstellung zur Funktionserläuterung eines Cyclo-Getriebes.

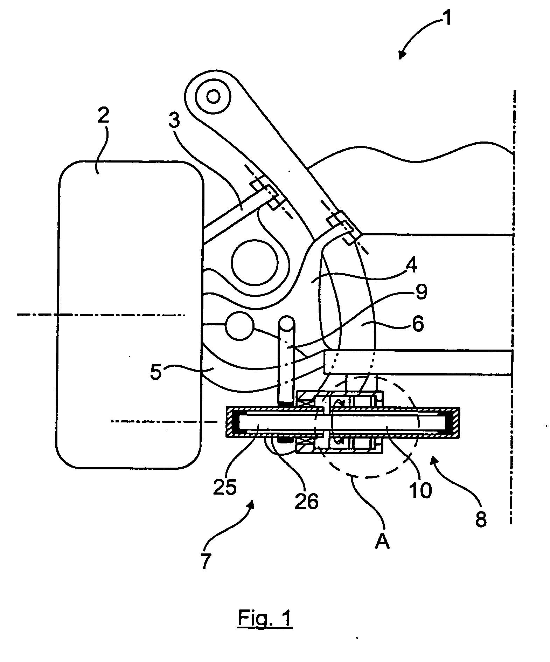

In der Fig. 1 ist eine schematische Draufsicht auf den linken Teil einer hinteren Radaufhängung 1 dargestellt mit einem Rad 2, radführenden Lenkern 3, 4, 5 und einem Hilfsrahmen 6.

Am Hilfsrahmen 6 ist ein Achssteller 7 angebracht, der ein Drehfedersystem 8 als Speicherfeder enthält mit einer Verbindung durch eine Drehschwinge 9 zum Lenker 4.

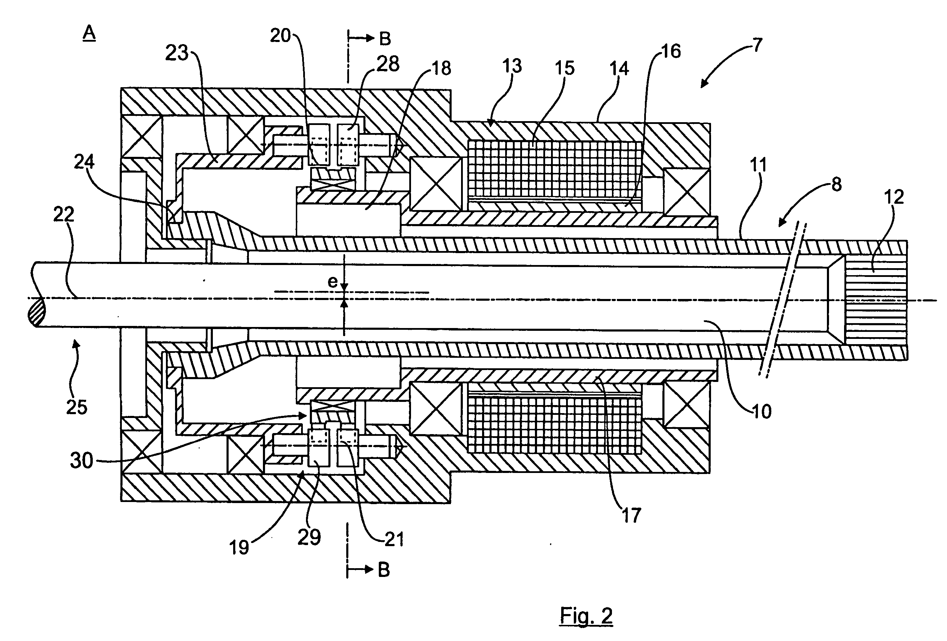

Der rechte Teil des Achsstellers 7 ist im Bereich A in Fig. 2 vergrößert im Detail dargestellt:
Das Drehfedersystem 8 enthält einen Drehfederstab 10 aus Vollmaterial, der etwa horizontal in Fahrzeugquerrichtung verläuft und der in einem Drehfederrohr 11 aufgenommen ist. Der Drehfederstab 10 und das Drehfederrohr 11 sind endseitig über eine Steckverzahnung 12 drehfest verbunden. Der Achssteller 7 umfasst weiter einen Stellantrieb 13, durch den das Drehfederrohr 11 mit dem innenliegenden Drehfederstab 10 geführt ist. Bei dieser Anordnung ist das Stellantriebgehäuse 14 mit dem Hilfsrahmen 6 verbunden (siehe Fig. 1). Ein Elektromotor des Stellantriebs 13 besteht aus einem gehäusefesten Stator 15 und einem Rotor 16 mit einer Motor-Hohlabtriebswelle 17, durch die koaxial das Drehfederrohr 11 mit dem innenliegenden Drehfederstab 10 geführt ist.

Diese Motor-Hohlabtriebswelle 17 trägt endseitig einen Exzenter 18 als Antriebsexzenter für ein Cyclo-Getriebe 19, mit einer Kurvenscheibe 30, die zwei zueinander versetzte Kurvenabschnitte 20, 21 besitzt. Die Exzentrizität des Exzenterantriebs ist mit e an der Achse 22 angegeben. Im Kurvenabschnitt 21 wälzen sich auf gehäusefesten Bolzen 28 aufgesetzte Rollen ab, wobei sich gleichzeitig im Kurvenabschnitt 20 Rollen auf Bolzen 29 der Getriebeabtriebswelle des Cyclo-Getriebes 19 abwälzen.

Die Getriebeabtriebswelle ist als Getriebe-Hohlabtriebswelle 23 ausgeführt, die das Drehfederrohr 11 an dessen Endseite umfasst und an einer Schulter 24 drehfest verbunden ist. Eine Drehbewegung der Getriebeabtriebswelle wird somit auf das Drehfederrohr 11 übertragen und durch die Steckverzahnung 12 zurück auf den Drehfederstab 10 geleitet, der mit einem Überstand 25 aus dem Stellantrieb 13 ragt.

Wie aus der Fig. 1 ersichtlich, ist dieser Überstand 25 des Drehfederstabs 10 in einem zweiten Drehfederrohr 26 aufgenommen, wobei auch hier deren Endseiten drehfest verbunden sind. Das zweite Drehfederrohr 26 ist wiederum zurückgeführt zum Stellantrieb-Gehäuse 14 und dort verdrehbar gelagert. Vor dem Stellantriebgehäuse 14 ist die Drehschwinge 9 verdrehfest angeschlossen. Insgesamt wird somit ein über das Cyclo-Getriebe 19 und dessen Getriebe-Hohlabtriebswelle 23 aufgebrachtes Drehmoment über das erste Drehfederrohr 11 auf dem Drehstab 10 und weiter über das zweite Drehfederrohr 26 auf die Drehschwinge 9 und den Lenker 4 auf das Rad 2 geleitet.

Mit dem schematischen Schnitt B-B wird die grundsätzliche Funktion des Cyclo-Getriebes 19 erläutert:
In einem feststehenden Kreisring 27 ist ein innerer Bolzenring 28 angebracht, wo sich im Kurvenabschnitt 21 auf gehäusefesten Bolzen 28 aufgesteckte Rollen abwälzen. Dazu wird der im Durchmesser gegenüber dem Bolzenring kleinere Kurvenabschnitt 21 als Taumelscheibe mit dem Exzenter 18 (Exzentrizitäte e) angetrieben. Wenn sich der Kurvenabschnitt 21 im Uhrzeigersinn innerhalb des Bolzenrings fortbewegt, dreht sich die Kurvenscheibe 30 gleichzeitig mit reduzierter Drehbewegung entgegen dem Uhrzeigersinn um ihre Achse. Durch die Taumelbewegung der doppelten Kurvenscheibe 30 wird diese mit dem Kurvenabschnitt 20 in den Rollen auf den Bolzen 29 der Getriebe-Hohlabtriebswelle 23 abgewälzt, wodurch die gleichmäßige Abtriebsbewegung entsteht.

Die Schachtelung des Drehfedersystems 8 in Verbindung mit dem Cyclo-Getriebe 19 führt zu hochleistungsfähigen, kompakten und einfach zu montierenden Konfigurationen, die sich durch hohe Übersetzung, hohe Schocküberlastbarkeit, geringe Massenträgheit und geringes Laufgeräusch auszeichnen.

## Patentansprüche

1. Achssteller, insbesondere Hinterachssteller eines Kraftfahrzeugs mit einem Drehfedersystem (8) als Speicherfeder, das einerseits über eine Drehschwinge (9) mit einem Achslenker (4) verbunden ist und andererseits über einen steuerbaren Stellantrieb (13) fahrzeugfest abgestützt ist, wobei das Drehfedersystem (8) ineinander geschachtelt wenigstens ein Drehfederrohr (11) und wenigstens einen Drehfederstab (10) aufweist, und der Stellantrieb (13) aus einem Elektroantrieb (15, 16) besteht, dem ein Getriebe (19) nachgeschaltet ist, dessen Abtriebswelle (23) für eine Drehverstellung mit dem Drehfedersystem (8) verbunden ist, **dadurch gekennzeichnet, dass** das Getriebe (19) ein Cyclo-Getriebe ist, wobei das Drehfederrohr (11) mit dem innen liegenden Drehfederstab (10) koaxial durch den Stellantrieb (13) geführt ist, dergestalt, dass ein Stellantrieb-Gehäuse (14) mit einem fahrzeugfesten Hilfsrahmen (6) verbunden ist, dass der Elektroantrieb aus einem gehäusefesten Stator (15) und einem Rotor (16) mit einer Motor-Hohlabtriebswelle (17) gebildet ist, durch die koaxial das Drehfederrohr (11) mit dem Drehfederstab (10) geführt ist, und dass die Motor-Hohlabtriebswelle (17) endseitig zum freien Drehfederrohrende hinweisend einen Exzenter (18) als Antriebsexzenter für wenigstens eine Kurvenscheibe (20, 21) des Cyclo-Getriebes (19) aufweist, wobei die wenigstens eine Kurvenscheibe (20, 21) entlang des inneren Umfanges eines feststehenden, koaxialen Bolzenrings (28) des Cyclo-Getriebes (19) abwälzbar ist.

2. Achssteller nach Anspruch 1, **dadurch gekennzeichnet, dass** das Drehfedersystem (8) einen Drehfederstab (10) aus Vollmaterial enthält, der etwa horizontal in Fahrzeugquerrichtung verläuft und der teilweise in einem Drehfederrohr (11) verdrehbar aufgenommen ist, wobei der Drehfederstab (10) endseitig mit dem Drehfederrohr (11) verdrehfest verbunden ist, und dass die Getriebe-Abtriebswelle (23) des Cyclo-Getriebes (19) mit dem freien Drehfederrohrende drehübertragend fest verbunden ist.

3. Achssteller nach Anspruch 2, **dadurch gekennzeichnet, dass** die Getriebeabtriebswelle als Getriebe-Hohlabtriebswelle (23) das Drehfederrohr (11) umfasst und mit diesem endseitig drehübertragend verbunden ist, wobei der Drehfederstab (10) über diese Verbindungsstelle mit einem Überstand (25) aus dem Stellantrieb (13) ragt und dort direkt oder indirekt verdrehfest mit der Drehschwinge (9) verbunden ist.

4. Achssteller nach Anspruch 2, **dadurch gekennzeichnet, dass** der Überstand (25) des Drehfederstabs (10) in einem zweiten Drehfederrohr (26) verdrehbar aufgenommen ist, wobei der Drehfederstab (10) endseitig mit dem zugeordneten Drehfederrohrende drehübertragend fest verbunden ist, und
dass das zweite Drehfederrohr (26) in der Nähe des Stellantriebs (13) mit einem zweiten freien Drehfederrohrende zurückgeführt ist und dort die Drehschwinge (9) verdrehfest angeschlossen ist.

5. Achssteller nach einem der Ansprüche 1 bis 4, **dadurch gekennzeichnet, dass** die Drehschwinge (9) über eine Koppel an einen Trapezlenker (4) des Fahrwerks angeschlossen ist.

6. Achssteller nach einem der Ansprüche 2 bis 5, **dadurch gekennzeichnet, dass** die jeweils endseitige drehübertragende feste Verbindung zwischen dem Drehfederstab (10) und dem einen und/oder zweiten Drehfederrohr (11, 26) durch eine Steckverbindung mit Verzahnung und gegebenenfalls einer Axialsicherung ausgeführt ist.

7. Achssteller nach einem der Ansprüche 1 bis 6, **dadurch gekennzeichnet, dass** das Cyclo-Getriebe (19) zwei parallele Kurvenscheiben (20, 21) aufweist.

## Claims

1. Axle actuator, in particular a rear axle actuator of a motor vehicle comprising a torsion spring system (8) as a pre-loaded spring, which, on the one hand, is connected to an axle link (4) via a torsion swing arm (9), and, on the other hand, is supported via a controllable actuating drive (13) and attached to the vehicle, the torsion spring system (8) comprising at least one torsion spring bar (11) and at least one torsion bar (10), nested inside one another; and the actuating drive (13) consisting of an electric drive (15, 16), downstream of which is a gear mechanism (19), the output shaft (23) of which is connected to the torsion spring system (8) for torsion adjustment; **characterised in that** the gear mechanism (19) is a cycloid gear mechanism, the torsion spring bar (11) with the inner torsion bar (10) being guided coaxially through the actuating drive (13) in such a way that an actuating drive housing (14) is connected to a subframe (6) attached to the vehicle; **in that** the electric drive is formed by a stator (15) attached to the housing and a rotor (16) having a hollow motor output shaft (17), through which the torsion spring bar (11) with the torsion bar (10) is guided coaxially; and **in that** the hollow motor output shaft (17) comprises, at its end facing towards the free end of the torsion spring bar, an eccentric (18) as a drive eccentric for at least one cam disc (20, 21) of the cycloid gear mechanism (19), the at least one cam disc (20, 21) being able to be rolled along the inner circumference of a stationary ring gear (28) of the cycloid gear mechanism (19).

2. Axle actuator according to claim 1, **characterised in that** the torsion spring system (8) contains a torsion bar (10) made of solid material, which extends substantially horizontally in the transverse direction of the vehicle and is rotatably accommodated, in part, in a torsion spring bar (11), the torsion rod (10) being rotationally engaged at its end with the torsion spring bar (11); and **in that** the gear output shaft (23) of the cycloid gear mechanism (19) is rigidly connected to the free end of the torsion spring bar in a torsion transmitting manner.

3. Axle actuator according to claim 2, **characterised in that**, as a hollow gear output shaft (23), the gear output shaft surrounds the torsion spring bar (11) and is connected thereto at its end in a torsion transmitting manner, an excess length (25) of the torsion rod (10) projecting from the actuating drive (13) beyond this connection position and being directly or indirectly rotationally engaged here with the torsion swing arm (9).

4. Axle actuator according to claim 2, **characterised in that** the excess length (25) of the torsion rod (10) is rotatably accommodated in a second torsion spring bar (26), the torsion rod (10) being rigidly connected at its end to the associated end of the torsion spring bar in a torsion transmitting manner; and
**in that** the second torsion spring bar (26) is returned with a second free end of the torsion spring bar in the region of the actuating drive (13) and the torsion swing arm (9) is rotationally engaged here.

5. Axle actuator according to any one of claims 1 to 4, **characterised in that** the torsion swing arm (9) is connected to a trapezoidal link (4) of the chassis via a coupling member.

6. Axle actuator according to any one of claims 2 to 5, **characterised in that** each torsion transmitting rigid connection between the end of the torsion rod (10) and the first and/or second torsion spring bar (11, 26) is formed by a plug connection having gear teeth and optionally an axial retaining element.

7. Axle actuator according to any one of claims 1 to 6, **characterised in that** the cycloid gear mechanism (19) comprises two parallel cam discs (20, 21).

## Revendications

1. Régulateur d'essieu, en particulier régulateur d'essieu arrière d'un véhicule automobile avec un système à ressort de torsion (8) en guise de ressort accumulateur, qui, d'une part, est raccordé via une coulisserotative (9) à une bielle d'essieu (4) et qui, d' autre part, s'appuie de manière fixe sur le véhicule via un mécanisme de commande réglable (13), sachant que le système à ressort de torsion (8) présente, emboîtés l'un dans l'autre, au moins un tube à ressort de torsion (11) et au moins une tige à ressort de torsion (10), et le mécanisme de commande (13) est constitué d'un mécanisme d'entraînement électrique (15, 16), en aval duquel est montée une transmission (19), dont l'arbre de sortie (23) est raccordé pour un réglage de rotation au système à ressort de torsion (8), **caractérisé en ce que** la transmission (19) est une transmission cycloïdale, sachant que le tube à ressort de torsion (11) est guidé, avec la tige à ressort de torsion (10) située à l'intérieur, coaxialement par le mécanisme de commande (13) de sorte qu'un boîtier (14) du mécanisme de commande soit raccordé à un châssis auxiliaire (6) fixé au véhicule, **en ce que** le mécanisme d'entraînement électrique est formé d'un stator (15) fixé au boîtier et d'un rotor (16) avec un arbre de sortie creux (17) du moteur, via lequel le tube à ressort de torsion (11) avec la tige à ressort de torsion (10) est guidé coaxialement, et **en ce que** l'arbre de sortie creux (17) du moteur présente, à une extrémité, tournée vers l'extrémité libre du tube à ressort de torsion, une excentrique (18) sous la forme d'une excentrique d'entraînement pour au moins un disque de came (20, 21) de la transmission cycloïdale (19), sachant que le au moins un disque de came (20, 21) peut être appliqué le long de la circonférence interne d'une bague à goupilles (28) coaxiale fixe de la transmission cycloïdale (19).

2. Régulateur d'essieu selon la revendication 1, **caractérisé en ce que** le système à ressort de torsion (8) contient une tige à ressort de torsion (10) constituée d'un matériau plein, qui s'étend à peu près horizontalement dans la direction transversale du véhicule et qui est reçue à rotation partiellement dans un tube à ressort de torsion (11), sachant que la tige à ressort de torsion (10) est raccordée de manière solidaire en rotation à une extrémité au tube à ressort de torsion (11) et **en ce que** l'arbre de sortie de transmission (23) de la transmission cycloïdale (19) est raccordé de manière fixe en transmission de rotation à l'extrémité libre du tube à ressort de torsion.

3. Régulateur d'essieu selon la revendication 2, **caractérisé en ce que** l'arbre de sortie de transmission comprend comme arbre de sortie creux de transmission (23) le tube à ressort de torsion (11) et est raccordé à celui-ci à une extrémité en transmission de rotation, sachant que la tige à ressort de torsion (10) dépasse du mécanisme de commande (13) sur ce point de raccordement avec une saillie (25) et est raccordée directement ou indirectement à cet endroit de manière solidaire en rotation à la coulisse rotative (9).

4. Régulateur d'essieu selon la revendication 2, **caractérisé en ce que** la saillie (25) de la tige à ressort de torsion (10) est reçue à rotation dans un second tube à ressort de torsion (26), sachant que la tige à ressort de torsion (10) est raccordée à une extrémité de manière fixe en transmission de rotation à l'extrémité affectée du tube à ressort de torsion, et
**en ce que** le second tube à ressort de torsion (26) est ramené à proximité du mécanisme de commande (13) avec une seconde extrémité libre du tube à ressort de torsion et la coulisse rotative (9) est reliée à cet endroit de manière solidaire en rotation.

5. Régulateur d'essieu selon l'une quelconque des revendications 1 à 4, **caractérisé en ce que** la coulisse rotative (9) est reliée par une bielle à un bras de suspension trapézoïdal (4) du châssis.

6. Régulateur d'essieu selon l'une quelconque des revendications 2 à 5, **caractérisé en ce que** la liaison fixe respectivement à une extrémité, transmettant la rotation, entre la tige à ressort de torsion (10) et le premier et/ou le second tube à ressort de torsion (11, 26) est réalisée par un raccord enfichable avec une denture et éventuellement une sécurité axiale.

7. Régulateur d'essieu selon l'une quelconque des revendications 1 à 6, **caractérisé en ce que** la transmission cycloïdale (19) présente deux disques de came (20, 21) parallèles.
